Europäisches Patentamt

European Patent Office

Office européen des brevets

(11) Publication number: **0 137 556**
**B1**

(12) EUROPEAN PATENT SPECIFICATION

(45) Date of publication of patent specification: **30.01.91**

(21) Application number: **84201349.2**

(22) Date of filing: **18.09.84**

(51) Int. Cl.⁵: **A 23 N 12/08**

(54) **A continuous coffee roaster.**

(30) Priority: **19.09.83 NL 8303228**

(43) Date of publication of application:
**17.04.85 Bulletin 85/16**

(45) Publication of the grant of the patent:
**30.01.91 Bulletin 91/05**

(84) Designated Contracting States:
**AT BE CH DE FR GB IT LI LU NL SE**

(56) References cited:
**EP-A-0 063 486**
**DE-A-2 100 248**
**FR-A-2 171 337**
**GB-A- 814 756**
**GB-A-1 048 817**
**NL-C- 156 899**
**US-A-2 716 936**

(73) Proprietor: **Douwe Egberts Koninklijke Tabaksfabriek- Koffiebranderijen-Theehandel N.V.**
**Keulsekade 143**
**NL-3532 AA Utrecht (NL)**

(72) Inventor: **van Tongeren, Diederik Hendrik David**
**Kofskip 5**
**NL-8501 SH Joure (NL)**

(74) Representative: **Smulders, Theodorus A.H.J., Ir. et al**
**Vereenigde Octrooibureaux Nieuwe Parklaan 107**
**NL-2587 BP 's-Gravenhage (NL)**

Courier Press, Leamington Spa, England.

## Description

This invention relates to an apparatus for continuously roasting coffee beans, comprising a plurality of compartments arranged for moving the coffee beans along a plurality of series-connected processing zones, which zones are fitted with roasting or cooling gas supply means including a valve in each supply duct which duct leads to a processing zone and supplies roasting gas to the processing zones and wherein the coffee beans are fed to the first compartment, from a feeding hopper and whilst being transferred from one compartment to the next are roasted by the roasting gas and leave the apparatus at the last compartment, the apparatus comprising control means for regulating the temperature and/or the quantity of the roasting gas, as known from EP—A—0063486.

For roasting coffee, normally use is made both of charge-type coffee roasters and of continuous-type coffee roasters. Especially with very short roasting times, continuous-type roasters have the advantage over charge-type roasters that the roasting degree and other qualitative properties of the roasted coffee can be kept better within a narrow bandwidth around the desired value.

In order to produce a product of constant properties, in fact, all product charges should traverse a parallel temperature and time history. With charge roasters, this means that very high requirements are imposed on the roasting gas temperature control system. Moreover, the large heat content of the metal of the roaster body and the roasting gas circuit will oppose a rapid adjustment of the required roasting gas temperature. According as shorter roasting times are employed, it becomes more difficult to control the required process conditions in a reproducible manner. In continuous coffee roasters, the product traverses a number of process zones wherein constant process conditions can be maintained in a simple manner.

Both the employed roasting time and the degree of roasting have an essential influence on the physical, the sensoric as well as the chemical properties of the roasted coffee. Consequently, it is desirable that all individual beans of a given coffee species or blend are subjected to a controlled identical treatment during the roasting process. One of the basic conditions therefor is that the residence times of all coffee beans are identical, i.e. a plug flow should be realized or there should be no spread in residence time of the beams in the coffee roaster.

None of the continuous coffee roasters hitherto commercially employed, in which the coffee transport is based on a continuous, possibly fluidized stream of product through the roaster body meets this criterion. Coffee roasters of such a type are described e.g. in U.S. Patents 3,229,377 and 3,595,668 and British patent 814,756. For a proper control of the physical, chemical and sensoric properties of roasted coffee, only those continuous roasters are suitable in which the product stream, during the transport through the roaster body is divided into a plurality of successive and well-separated small charges by means of compartments. No residence time spread occurs in these coffee roasters, so that, if the roasting gas temperature control system is properly realized, a product of a very constant quality can be obtained after reaching stationary production and process conditions. Coffee roasters satisfying this criterion are described e.g. in U.S. patent 2,716,936, German Offenlegungsschrift 2,100,248 and European patent application 0,063,486.

However, even these continuous roasters have the drawback that, as regards the desired roasting degree, sharp deviations occur during the starting-up and/or stopping of the roasting process and/or during the switching-over to a different coffee species or blend. Several factors play a role herein. The EP—A—0 063 486 discloses the features mentioned in the preamble of the claim. This known apparatus is particularly suitable for roasting peanuts, although on page 19 of this citation it is said that also coffee beans can be used.

When relatively low process gas flow rates are used for the roasting process, high roasting gas temperatures have to be employed. When such a coffee roaster is preheated to the desired process temperature, such a large quantity of heat is accumulated in the metal of the roaster body that the first product supplied receives too much heat and hence exists from the roaster in an overroasted state or, in the extreme case, even in a burnt state. Our experiments have shown that this phenomenon occurs when process gas temperatures above approx. 240°C are used. For continuous coffee roasters, in which higher process gas temperatures are employed, e.g. as described in German Offenlegungsschrift 2,100,248, special starting-up procedures have to be utilized, e.g. the premature starting of the coffee supply during the warming-up phase of the roaster. In such procedures, the coffee supply should be started when a certain process gas temperature is reached, which may strongly differ per coffee species or blend. Since coffee is a natural product of greatly varying properties, such as moisture content and composition (among other things due to climatological circumstances during growth) and also the supply on the world market may vary substantially for the various species, the required feed starting points will be subject to strong fluctuations too. Therefore, the feed starting points must be determined experimentally in each case, resulting in regular loss of product or depreciation due to the deviating roasting degrees.

With continuous-type coffee roasters as described in U.S. patent 2,716,936 and European application 0 063 486, the process gas flow rate and hence the heat supply to the coffee-loaded roaster compartments is determined to a large extent by the loaded or non-loaded state of the other compartments in the roaster body. In fact, in this kind of continuous-type coffee roasters, the roasting gas flow rate through a compartment is determined by the combined resistance across the product layer and that across the perforated or nozzle sheet through which the roasting gas is blown into the compartment. At a fixed total flow rate of the roasting gas, the flow rate of roasting gas through the still empty roaster compartments will be higher at the expense of the compartments already filled with product. The product in the loaded cells will thus receive less heat than required and, consequently, will not attain the desired roasting degree. This effect will occur both during the starting-up and during the stopping of the roasting process, since then all compartments are not yet, or no longer, filled with coffee.

This effect can be prevented by applying a very high resistance for the process gas across the nozzle sheet, so that the resistance across the product layer exerts a relatively small influence on the process gas flow rate through the individual roaster compartments, as is done e.g. in the continuous coffee roaster described in U.S. patents 3,730,731, 3,763,766 and 4,096,792 and Dutch patent 156,899. A substantial drawback of this solution, however, is that this high resistance across the nozzle sheets results in a very high consumption of electric power by the roasting gas blower. A substantial advantage of this type of roaster, however, is that when high roasting gas flow rates and hence roasting gas temperature lower than about 240°C are used at a given setting of the process conditions, it makes no difference whether product is supplied continuosuly so that all compartments are filled, or only one filled compartment is conducted through the roaster body. In both cases, the coffee exits from the roaster with a completely identical roasting degree.

When, during the starting-up of the continuous coffee roaster, the product does not meet the desired quality standard, a large quantity of product will have deviated from this standard, which may lead to substantial degradation losses. When, however, only one compartment needs to be filled, with the same result, losses can be very substantially reduced.

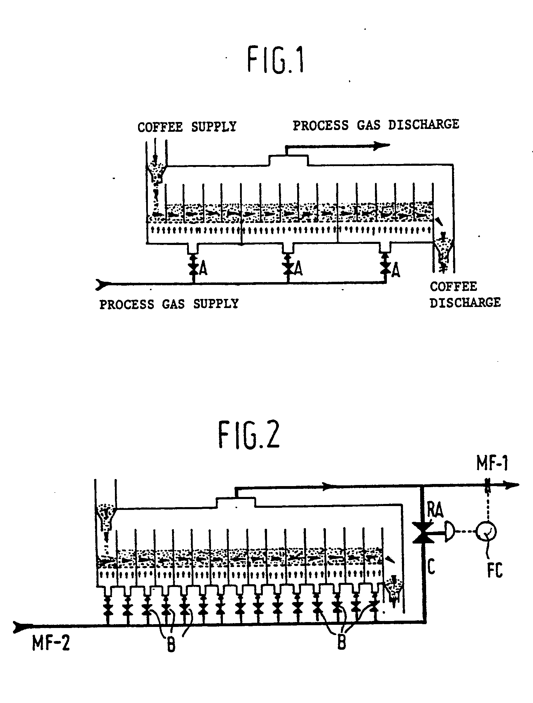

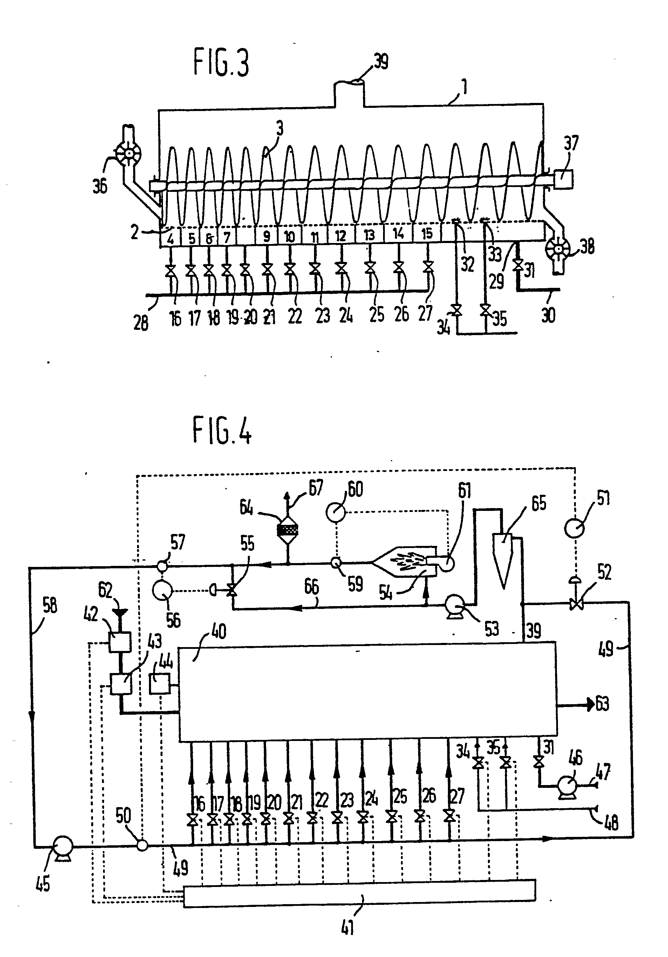

The invention provides a method of limiting these starting-up and stopping losses for certain commercially employed types of coffee roasters to only some compartment fillings, without at the same time resulting in higher power consumptions by the roasting gas blower. In all hitherto known continuous-type roasters, the roasting gas supply to the product compartments has been divided into at most three roasting zones separately fed. See e.g. Fig. 1 showing a diagrammatic representation of a continuous-type coffee roaster having 15 roasting compartments and 3 roasting gas supply zones. The valves (A), which may be mounted in the process gas supply ducts are then only used for setting the roasting gas flow rate required in these roasting zones once and for all. The advantage obtained in this embodiment is connected to the circumstances that as the roasting process progresses:

A. The heat supplied should be increasingly less in order that the roasting process should not proceed too fast, so that the desired roasting degree remains better controllable.

B. The specific weight of the coffee beans gradually decreases, so that in case of high roasting gas flow rates, there is the risk that the product is entrained by the roasting gas, which would lead to loss of product or blow-over of product into other compartments, thus producing residence time spread, resulting in a non-uniform product.

According to the invention, the number of series-connected processing zones having roasting gas supply means is at least six, the number of said processing zones having its own roasting as supply means is at least half the number of compartments said control means further comprises a first indicator which detects the presence of coffee in said feeding hopper, a second indicator which detects the feeding of coffee, a third indicator which detects the movement of the coffee beans along the processing zones and a control device according to the principles of a shift register to record the parameters given by said indicators in order to determine the presence or absence of coffee beans in each compartment, said valves being independently and individually regulated by said control device.

In a further elaboration of the invention the apparatus also comprises means for quickly cooling the coffee beans after completion of the roasting process by the injection of cooling water, so that the roasting gas process is rapidly completed.

Further the means for controlling the roasting gas stream to each processing zone comprise a main duct for the supply of roasting gas and parallelly arranged side ducts from said main duct each side duct leading to a corresponding processing zone and each provided with a valve, furthermore comprising detecting means for detecting the presence of coffee in each particular one of said processing zones and means to set the valves in a desired position according to the detected presence or absence of coffee.

The apparatus according to the invention provides the possibility of supplying the compartments containing product with the desired quantity of roasting gas, so that:

a. it is prevented that, when high roasting gas temperatures are used, heat accumulation occurs in the product compartments not yet filled, so that the "leading" amount of product would be overheated and hence overroasted or, in the extreme case, burnt;

b. it is prevented that the roasting as, due to the lower flow resistance, preferentially flows through the empty product compartments, so that the product-loaded compartments receive too little roasting gas and hence too little energy, resulting in the product present therein being insufficiently roasted;

c. it is possible to pass only one product charge, of a size equal to the normal filling of one compartment in the continuous mode of operation, through the coffee roaster, with the degree of roasting of this single charge becoming equal to the degree of roasting of the product in the continuous mode if corresponding process conditions are used. This procedure is employed during the starting-up with, or the switching-over to, a new coffee species or blend, so that product losses or degradation can be minimized.

If this method should be used without more ado, the varying total roasting gas flow rate, due to the varying number of opened valves (B), upsets the temperature control in the roasting gas supply circuit, resulting in a fluctuating degree of roasting of the product. Accordingly, the roasting gas supply duct should be provided with a bypass (C) connected to the process gas discharge duct, in which bypass there is mounted a controllable valve (RA) by means of which the total process gas flow can be kept constant. Preferably, upstream in the process gas supply duct (MF-2), or as an alternative, downstream in the process gas discharge cost (MF-1), there is mounted a flow rate meter adjusting the said controllable valve in the bypass by means of a control device (FC), so that the total roasting gas flow rate is kept constant and hence no derangement of the roasting gas temperature control will occur.

In a further embodiment of the invention, the valves (B) in the process gas supply duct to each compartment can be set in two partly opened positions in such a manner that in the one, most widely opened position, a correct process gas flow rate in the product filled compartment is ensured, while the less widely opened position ensures the maintenance of the same process gas flow rate when no product is present in that compartment. In that case, the above mentioned bypass between the roasting gas supply duct and the roasting gas discharge duct is not necessary. This last embodiment, however, can only be employed when roasting gas temperature below approx. 240°C are used.

One embodiment of the complete apparatus according to the invention for continuously roasting coffee will now be decribed, by way of example, with reference to Figs. 3 and 4 of the accompanying drawings. Fig. 3 shows an apparatus for continuously roasting coffee according to the invention.

The roaster body comprises a housing 1 containing a semi-circular screen bottom 2 above which the coffee is kept in fluidized motion. The fluidized coffee is compartmentalized and transported over the screen bottom by means of a screw conveyor 3. The screw conveyor has a progressive pitch above the roasting gas supply compartments 4—15, so that the capacity of the compartments formed by the screw conveyor increases with the progress of the roasting process and the concomitant increase in bulk volume of the coffee beans. The compartments may also be formed by screw conveyors with the understanding that, here too, the capacity of the compartments should increase in accordance with the increase in bulk volume of the coffee with the progress of the roasting process. The space underneath the screen bottom 2, serving for the supply of the roasting gas, is divided by means of partitions into compartments 4—15, the dimensions of which increase in accordance with the progressiveness of the screw conveyor pitch. Each of said roasting gas supply compartments is fed from the roasting gas supply duct 28 by means of a valve 16—27 which provides for the possibility of supplying roasting gas only to those product compartments, formed by the screw convyeor, wherein coffee is present.

The last four threads of the screw conveyor are disposed over a cooling air supply compartment 29, which is supplied from a cooling air supply duct 30 through an adjustable valve 31, with the quantity of cooling air required for a good fluidization in the cooling zone. For the purpose of quenching the coffee at the end of the roasting process, sprayers 32, 33 for injecting cooling water are mounted in the screen bottom underneath the first two threads of the cooling zone. By means of valves 34, 35 in the water pipe, it is ensured that cooling water is only supplied when coffee is present in the superjacent thread.

The green coffee to be roasted is fed into the coffee roaster by means of a cell wheel lock 36 and is transported through the roasting and the cooling zone by means of the screw conveyor 3 driven by an electric motor 37, and subsequently sluiced out of the roaster again by means of a second cell wheel lock 38. The spent roasting gas, the cooling air used, the evaporated cooling water and all substances emerging from the coffee during the roasting process leave the coffee roaster through the process gas discharge duct 39 disposed in the top of the roaster housing.

The flow diagram of Fig. 4 shows the complete apparatus for the continuous roasting of coffee with the appurtenant control facilities. In the diagram, the housing 1 with its innards as shown in Fig. 3, is represented by a block 40.

The green coffee is supplied from a buffer hopper 62 via an indicator 42, which detects the presence of green coffee, and a volumetric or gravimetric charge feeding unit 43.

Furthermore, the screw conveyor in the roaster is provided with an indicator with shift register 44, by means of which the number of revolutions of the screw conveyor can be detected.

The above functions 42, 43 and 44 serve as input conditions for the control device 41 to establish that a charge of green coffee has been fed into the first roasting gas compartment. The control device 41, which may consist e.g. of an electronic, freely programmable control unit, as available in many standard forms and manufactures, comprises a shift register, by means of which the presence or absence of coffee in the individual roasting compartments can be recorded. By means of the revolution indicator 44 of the screw conveyor, a pulse is transmitted to the shift register per revolution of the screw conveyor, so that the position of coffee-filled roasting compartments recorded therein is shifted by one position.

The roasting gas supply valves 16—27 are controlled from said shift register in such a manner that the roasting gas supply to the roasting compartments during the starting-up, i.e. during the filling of the roaster with product, is one compartment ahead of the product, and during the stopping, i.e. during the emptying of the roaster, the roasting gas supply is one compartment behind the product. It is thus achieved that the roasting gas required in a compartment for the roasting process is fully available already (or still) at the moment when the coffee reaches (or leaves) the compartment concerned. In Fig. 3, this means for instance that in the presence of coffee in the roasting compartments above the roasting gas supply zones 9, 10, roasting gas is supplied to the roasting gas supply zones 8, 9, 10 and 11, i.e. the control device 41 is programmed in such a manner that the valves 20, 21, 22 and 23 are open.

Similarly, the control device 41 actuates the cooling water supply valves 34, 35 in the cooling zone except, however, that the supply of the cooling water may not lead or trail relative to the presence of coffee in the cooling compartment in question, but water is only supplied if coffee is present above supply nozzles 32, 33.

The roasting gas system of Fig. 4 comprises a recycling circuit according to a basic principle, as already employed in many commercial coffee roasters. Additionally provided, however, is a device necessary for maintaining the flow rate of recycled roasting gas when using the system of supply of roasting gas to the individual roasting gas compartments in accordance with the present invention.

The roasting gas is forced to the continuous coffee roaster 40 by means of a roasting as blower 45 and, in the presence of coffee in the roasting compartments concerned, is conducted into the coffee roaster via the roasting gas supply duct 49 and the roasting gas supply valves 16—27. To prevent total or partial blocking of the roasting gas flow in the absence of coffee in the coffee roaster, or in case the roaster is partially loaded with coffee, there is provided a bypass 49 containing a control valve 52. By means of a flow rate meter 50 and a regulator 51, said control valve 52 is controlled in such a manner that the roasting gas supply rate in the recycling circuit remains constant. This prevents the roasting gas temperature control system from getting beyond its regulating range.

The bypass roasting gas 49 and the spent roasting gas 39 are subsequently exhausted jointly via a chaff and dust collecting cyclone 65 by a spent-roasting-gas blower 53, which blower distributes the spent roasting gas over the roasting gas furnace 54 and a bypass 66, which downstream are connected to a duct 58.

In the roasting gas furnace 54, the sub-stream of the spent roasting gas is heated by means of an oil or gas burner 61 to a temperature level that, with or without the use of a catalyst 64, ensures a sufficiently smokeless and odourless furnace effluent, so that the excess roasting gas can be discharged to the atmosphere via the spent-gas duct 67 without nuisance or exceeding environmental standards.

The desired furnace effluent temperature is controlled by means of a control device comprising a temperature meter 59 and a regulator 60, controlling the combustion air and fuel supply to the burner 61.

The remaining furnace effluent and the bypass 66 together form the new roasting gas 58. The desired roasting gas temperature is controlled by means of a control system comrising a temperature meter 59 and a regulator 56, which, by means of a control valve 55 in the bypass 66, controls the ratio between the quantities of spent roasting gas conducted via the roasting gas furnace 54 and the bypass 66.

## Claims

1. An apapratus for continuously roasting coffee beans, comprising a plurality of compartments arranged for moving the coffee beans along a plurality of series-connected processing zones, which zones are fitted with roasting or cooling gas supply means including a valve (16—27; 31) in each supply duct which duct leads to a processing zone and supplies roasting gas to the processing zones and wherein the coffee beans are fed to the first compartment, from a feeding hopper and whilst being transferred from one compartment to the next are roasted by the roasting gas and leave the apparatus at the last compartment, the apparatus comprising control means for regulating the temperature and/or the quantity of the roasting gas characterized in that

the number of series-connected processing zones having roasting gas supply means is at least six,

the number of said processing zones having its own roasting gas supply means is at least half the number of compartments

said control means further comprises a first indicator (42) which detects the presence of coffee in said feeding hopper, a second indicator (43) which detects the feeding of coffee, a third indicator (44) which detects the movement of the coffee beans along the processing zones and a control device (41) according to the principles of a shift register to record the parameters given by said indicators (41, 42, 43) in order to determine the presence or absence of coffee beans in each compartment,

said valves being independently and individually regulated by said control device (41).

2. An apparatus according to claim 1, characterized in that it also comprises means (32—35) for quickly cooling the coffee beans after completion of the roasting process by the injection of cooling water.

3. Apparatus according to claim 1 or 2, characterized in that the means for controlling the roasting gas stream to each processing zone comprise a main duct (28; 49) for the supply of roasting gas and parallelly arranged side ducts from said main duct each side duct leading to a corresponding processing zone and each provided with a valve (B; 16—27).

4. Apparatus according to claim 3 for use with processing gas temperatures above about 240°C characterized by means (53—57; 59—61) to keep a constant supply of processing gas into the said main duct, means (41) to set said valves (B; 16—27) in each of said side ducts in an open or closed position according to the detected presence or absence of coffee in each of said processing zones, corresponding with each of said valves and a bypass duct (49) for said main duct (C; 49) to discharge the surplus of processing gas not taken up by said side ducts.

5. Apparatus according to claim 3 for use with process gas temperatures below about 240° characterized by means to keep a constant supply of processing gas into said main duct (49), means to set said valves (16—27) in any one of said side ducts in an open position when the presence of coffee is detected in the processing zone corresponding with said one side duct and means to set said valves in any one of said side ducts in a squeezed position when the absence of coffee is detected in the processing zone corresponding with said one side duct, such as to ensure the same gas flow as the gas flow through the open valve to a processing zone containing coffee.

6. Apparatus according to one of the preceding claims, characterized in that each of said compartments corresponds with one processing zone.

7. Apparatus according to one of the preceding claims, characterized by comprising a screw conveyor for the movement of said compartments along said plurality of series connected processing zones.

8. Apparatus according to claim 7, characterized by said screw conveyor having a progressive pitch so that the capacity of said compartments increases with the increase of the bulk volume, concomitant with the progress of the roasting process.

**Patentansprüche**

1. Vorrichtung zum kontiniuerlichen Rösten von Kaffeebohnen, mit einer Mehrzahl von Kammern, die so angeordnet sind, daß die Kaffeebohnen durch eine Mehrzahl von in Reihe geschalteten Bearbeitungszonen bewegt werden, wobei diese Zonen mit Zufuhreinrichtungen für Röstgas oder Kühlgas versehen sind, welche ein Ventil (16—27; 31) in jedem Zufuhrkanal aufweisen, wobei dieser Zufuhrkanal zu einer Bearbeitungszone führt und den Bearbeitungszonen Röstgas zuführt, und wobei die Kaffeebohnen aus einem Aufgabetrichter in die erste Kammer eingegeben werden und beim Weiterführen von einer Kammer in die nächste vom Röstgas geröstet werden und die Vorrichtung an der letzten Kammer verlassen, wobei die Vorrichtung mit einer Steuereinrichtung zum Regeln der Temperatur und/oder der Durchflußmenge des Röstgases versehen ist, dadurch gekennzeichnet, daß

die Anzahl der in Reihe geschalteten, mit Röstgaszufuhreinrichtungen versehenen Bearbeitungszonen mindestens sechs beträgt,

die Anzahl der Bearbeitungszonen, welche ihre eigene Röstgaszufuhreinrichtung haben, mindestens halb so groß ist wie die Anzahl der Kammern,

die Steuereinrichtung einen ersten Anzeiger (42), der das Vorhandensein von Kaffee im Aufgabetrichter feststellt, einen zweiten Anzeiger (43), der die Zufuhr von Kaffee feststellt, einen dritten Anzeiger (44), der die Bewegung der Kaffeebohnen durch die Bearbeitungszonen feststellt, und eine Steuervorrichtung (41) nach den Prinzipien eines Schieberegisters zum Aufzeichnen der von den Anzeigern (42, 43, 44) gelieferten Parameter, um das Vorhandensein oder das Fehlen von Kaffeebohnen in jeder Kammer festzustellen, aufweist,

die Ventile unabhängig und einzeln von der Steuervorrichtung (41) gesteuert sind.

2. Vorrichtung nach Anspruch 1, dadurch gekennzeichnet, daß sie außerdem Einrichtungen (32, 35) zum schnellen Kühlen der Kaffeebohnen nach Vollendung des Röstprozesses durch Einspritzen von Kühlwasser aufweist.

3. Vorrichtung nach Anspruch 1 oder 2, dadurch gekennzeichnet, daß die Einrichtungen zum Steuern des Röstgasstromes zu jeder Bearbeitungzszone eine Hauptleitung (28; 49) zum Zuführen von Röstgas und von der Hauptleitung ausgehende parallel angeordnete Seitenleitungen aufweist, wobei jede Seitenleitung in eine entsprechende Behandlungszone führt und jeweils mit einem Ventil (B; 16—27) versehen ist.

4. Vorrichtung nach Anspruch 3 zur Verwendung bei Bearbeitungs-Gastemperaturen oberhalb etwa 240°C, gekennzeichnet durch Einrichtungen (53—57; 59—61) zum Konstanthalten der Zufuhr des Bearbeitungsgases in die Hauptleitung, Einrichtungen (41) zum Einstellen der Ventile (B; 16—27) in jeder der Seitenleitungen in eine Öffnungs- oder Schließposition gemäß der festgestellten Anwesenheit oder Abwesenheit von Kaffe in jeder der Bearbeitungszonen, die mit jedem der Ventile einer Bypaßleitung (49) für die Hauptleitung (C; 49) korrespondiert, um den von den Seitenleitungen dicht aufgenommenen Überschuß an Behandlungsgas abzuleiten.

5. Vorrichtung nach Anspruch 3 zur Verwendung bei Bearbeitungsgastemperaturen unterhalb etwa 240°C, gekennzeichnet durch Einrichtungen zum Aufrechterhalten eines konstanten Zustromes von Bearbeitungsgas in die Hauptleitung (49), Einrichtungen zum Einstellen der Ventile (16—27) jeder der Seitenleitungen in eine Öffnungsposition, wenn das Vorhandensein von Kaffee in der mit der betreffenden Seitenleitung korrespondierenden Bearbeitungszone festgestellt worden ist, und Einrichtungen zum Einstellen der Ventile in jeder der Seitenleitung in eine Schließposition, wenn das Fehlen von Kaffee in der mit der betreffenden Seitenleitung korrespondierenden Bearbeitungszone festgestellt worden ist, so daß derselbe Gasstrom wie der Gasstrom durch das offene Ventil zu einer Kaffee enthaltenden Bearbeitungszone gewährleistet ist.

6. Vorrichtung nach einem der vorhergehenden Ansprüche, dadurch gekennzeichnet, daß jede der Kammern mit einer Bearbeitungszone korrespondiert.

7. Vorrichtung nach einem der vorhergehenden Ansprüche, dadurch gekennzeichnet, daß sie einen Schneckenförderer für die Bewegung in den Kammern durch die Mehrzahl von in Reihe geschalteten Bearbeitungszonen aufweist.

8. Vorrichtung nach Anspruch 7, dadurch gekennzeichnet, daß der Schneckenförderer eine progressive Steigung hat, so daß das Fassungsvermögen der Kammern mit dem Ansteigen des Schüttvolumens entsprechend dem Fortschreiten des Röstprozesses zunimmt.

## Revendications

1. Dispositif pour torréfier en continu des grains de café, comprenant une pluralité de compartiments agencés de manière à déplacer les grains de café le long d'une pluralité de zones de traitement disposées en série, lesquelles zones sont équipées de moyens d'amenée d'un gaz de torréfaction ou de refroidissement, incluant une zone (16—27; 31) placée dans chaque conduit d'amenée, qui aboutit à une zone de traitement et envoie un gaz de torréfaction aux zones de traitement, et dans lequel les grains de café sont envoyés au premier compartiment, à partir d'une trémie de chargement et sont torréfiés par le gaz de torréfaction, lors de leur transfert d'un compartiment au suivant et quittent le dispositif au niveau du dernier compartiment, le dispositif comprenant des moyens de commande servant à régler la température et/ou la quantité du gaz de torréfaction et étant caractérisé en ce que:

le nombre de zones de traitement disposées en série et possédant des moyens d'amenée du gaz de torréfaction sont prévus en un nombre égal au moins à six,

le nombre desdites zones de traitement comportant leurs propres moyens d'amenée du gaz de torréfaction est égal au moins à la moitié du nombre de compartiments,

lesdits moyens de commande comprennent en outre un premier indicateur (42) qui détecte la présence de café dans ladite trémie de chargement, un second indicateur (43) qui détecte le chargement du café, un troisième indicateur (44) qui détecte le déplacement des grains de café dans les zones de traitement, et un dispositif de command (41) basé sur les principes d'un registre à décalage pour enregistrer les paramètres fournis par les indicateurs (41, 42, 43) de manière à déterminer la présence ou l'absence de grains de café dans chaque compartiment,

lesdites vannes étant réglées d'une manière indépendante et individuelle par ledit dispositif de commande (41).

2. Dispositif selon la revendication 1, caractérisé en ce qu'il comprend également des moyens (32—35) pour refroidir rapidement les grains de café, par injection d'une eau de refroidissement, une fois que le procédé de torréfaction est terminé.

3. Dispositif selon la revendication 1 ou 2, caractérisé en ce que les moyens servant à commander l'écoulement du gaz de torréfaction envoyé à chaque zone de traitement comprend un conduit principal (28; 49) prévu pour l'amenée du gaz de torréfaction et des conduits latéraux parallèles, qui s'étendent à partir dudit conduit principal conduisent chacun à une zone de traitement correspondant et sont équipés, chacun, d'une vanne (B; 16—27).

4. Dispositif selon la revendication 3, destiné à être utilisé avec des températures du gaz de traitement supérieures à 240°C, caractérisé par des moyens (53—57; 59—61) servant à maintenir un envoi constant de gaz de traitement dans ledit conduit principal, les moyens (41) pour régler lesdites vannes (B; 16—27) dans chacun desdits conduits latéraux dans une position ouverte ou fermée conformément à la présence ou à l'absence détectée de café dans chacune desdites zones de traitement, correspondant à chacune desdites vannes, et un conduit de dérivation (49) pour ledit conduit principal (C; 49) pour évacuer le surplus du gaz de traitement non véhiculé par lesdits conduits latéraux.

5. Dispositif selon la revendication 3, destiné à être utilisé avec des températures du gaz de traitement inférieures à environ 240°, caractérisé par des moyens pour maintenir un envoi constant du gaz de traitement dans ledit conduit principal (49), des moyens pour régler en position ouverte lesdites vannes (16—27) situées dans l'un quelconque desdits conduits latéraux lorsque la présence du café est détectée dans la zone de traitement correspondant à ce conduit latéral, et des moyens pour régler dans une position fermée lesdites vannes situées dans l'un quelconque desdits conduits latéraux, lorsque l'absence de café est détectée dans la zone de traitement correspondant à ce conduit latéral, de manière à garantir le même écoulement de gaz en tant qu'écoulement de gaz traversant la vanne ouverte, en direction d'une zone de traitement contenant le café.

6. Dispositif selon l'une des revendications précédentes, caractérisé en ce que chacun desdits compartiments correspond à une zone de traitement.

7. Dispositif selon l'une des revendications précédentes, caractérisé en ce qu'il comporte un convoyeur à vis servant à déplacer lesdits compartiments le long de ladite pluralité de zones de traitement raccordées en série.

8. Dispositif selon la revendication 7, caractérisé en ce que ledit convoyeur à vis possède un pas progressif de sorte que la capacité desdits compartiments augmente lorsque le volume en vrac augmente d'une manière concomitante avec la progression de l'opération de torréfaction.

## FIG.1

COFFEE SUPPLY     PROCESS GAS DISCHARGE

PROCESS GAS SUPPLY

A   A   A

COFFEE
DISCHARGE

## FIG.2

MF-1

RA

C

FC

MF-2

B     B

1

FIG.3

FIG.4